# EUROPÄISCHE PATENTANMELDUNG

(11) **EP 1 757 496 A2**
(43) Veröffentlichungstag der Anmeldung: **28.02.2007**
(21) Anmeldenummer: 06014981.2
(22) Anmeldetag: 19.07.2006
(51) Int. Cl.: B60R 21/34

(54) **Vorrichtung zum Aufstellen der Fronthaube eines Kraftfahrzeuges bei einem drohenden Personenaufprall mit einer Einrichtung zum Reversieren der aufgestellten Fronthaube**

(30) Priorität: 24.08.2005 DE 102005039908
(71) Anmelder: ISE Innomotive Systems Europe GmbH, 51702 Bergneustadt (DE)
(72) Erfinder: Lang, Jozsef, 1131 Budapest (HU); Mika, Frank, 51588 Nümbrecht (DE); Rex, Martin, 51570 Windeck (DE)
(74) Vertreter: Fuchs Mehler Weiss & Fritzsche

(57) **Zusammenfassung**

Die Erfindung bezieht sich auf eine Vorrichtung zum Schutz von Personen bei einem Frontalaufprall auf ein Kraftfahrzeug durch aktives Aufstellen dessen Fronhaube im Haubenscharnierbereich, bestehend aus einem Aufstellelement mit einem karosseriefesten Gehäuse und einem darin linear geführten, mit dem Haubenscharnier (1) verbundenen Hubelement, das gegen die Kraft einer vorgespannten Federanordnung mittels einer Halterung im Grundzustand niedergehalten ist , und sensorgesteuert unter Lösen der Halterung um einen vorgegebenen Hub unter Aufstellung der Fronthaube ausfahrbar ist, wobei dem Aufstellelement eine Einrichtung zum manuelleri Reversieren des aufgestellten Hubelementes unter Zuhilfenahme der Fronthaube als Hebel zugeordnet ist, welche ein fest montiertes Revers-Element in Form eines beim Öffnen der Fronthaube verzögerungsfrei auf eine vorgegebene Länge ausziehbaren Zug-Stabes (2) aufweist, das im Scharnierbereich einerseits an der Fronthaube und andererseits karosseriefest drehbeweglich angelenkt ist.

Um eine plastische Verformung der Fronthaube nach erfolgter Reversierung des Aufstellelementes zu verhindern sieht die Erfindung vor, dass im Zug-Stab (2) eine mechanische Überlastsicherung (2h mit 4; 2h mit 5 und 8b mit 7b) ausgebildet ist.

Bei Überschreitung der von der Überlastsicherung vorgegebenen Kraft erhält der manuell Reversierende eindeutige Signale zur Verminderung der auf die Fronthaube aufzubringenden Handkraft.

## Beschreibung

Die Erfindung bezieht sich auf eine Vorrichtung zum Schutz von Personen bei einem Frontalaufprall auf ein Kraftfahrzeug durch aktives Aufstellen dessen Fronhaube im Haubenscharnierbereich, bestehend aus einem Aufstellelement mit einem karosseriefesten Gehäuse und einem darin linear geführten, mit dem Haubenscharnier verbundenen Hubelement, das gegen die Kraft einer vorgespannten Federanordnung mittels einer Halterung im Grundzustand niedergehalten ist , und sensorgesteuert unter Lösen der Halterung um einen vorgegebenen Hub unter Aufstellung der Fronthaube ausfahrbar ist, wobei dem Aufstellelement eine Einrichtung zum manuellen Reversieren des aufgestellten Hubelementes unter Zuhilfenahme der Fronthaube als Hebel zugeordnet ist, welche ein fest montiertes Revers-Element in Form eines beim Öffnen der Fronthaube verzögerungsfrei auf eine vorgegebene Länge ausziehbaren Zug-Stabes aufweist, das im Scharnierbereich einerseits an der Fronthaube und andererseits karosseriefest drehbeweglich angelenkt ist.

Jährlich ereignen sich zahlreiche Unfälle, bei denen Fußgänger, seien es Kinder oder Erwachsene, bzw. Zweiradfahrer oder Skater, von einem Kraftfahrzeug angefahren, auf dessen Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweirad-fahrers gefährdet, da dieser bei einem Zusammenprall mit einem Kraftfahrzeug - wie Crash-Versuche und auch die Erfahrungen gezeigt haben -, etwa im hinteren, relativ harten Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es sind verschiedene Möglichkeiten zur Lösung dieses Problems bekannt geworden. Ein Lösungsprinzip besteht darin, den vorgenannten harten Übergangsbereich zur Windschutzscheibe nachgiebiger zu gestalten, beispielsweise gemäß DE 28 14 107 A1 in Verbindung mit der DE 28 41 315 A1 durch eine mittels eines Aufprall-Sensors betätigte Vorrichtung zur Verstellung der Fronthaube aus einer Ruheposition in eine demgegenüber angehobene, nachgiebige Aufprallposition, d. h. durch eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Die DE 197 12 961 A1 zeigt ebenfalls einen derartigen Aufprallschutz nach dem vorgenannten Prinzip der aktiven Fronthaube, deren windschutzscheibenseitige Scharnieranordnung über einen schwenkbar oder verschiebbar gelagerten Scharnierträger so an der Karosserie des Vorderwagens befestigt ist, dass im Falle einer Kollision des Fahrzeuges mit einer Person die Fronthaube samt der Scharnieranordnung mittels einer an dem Scharnierträger angreifenden energiespeichemder Einrichtung, z. B. einem Feder-Kraftspeicher, nach oben verschwenkt bzw. verschoben, d. h. angehoben werden kann.

Dieses Prinzip der aktiven Motorhaube hat in mehreren Konstruktionen seinen Niederschlag gefunden und sich verbreitet durchgesetzt.

Zum aktiven Aufstellen der Fronthaube dienen Aufstellelemente, auch Aktoren genannt, die typischerweise ein karosseriefest angebrachtes Unterteil und ein darin aufstellbar geführtes Hubelement in Verbindung mit einem Energiespeicher besitzen, der durch einen sensorgesteuerten Aktuator im Fall eines drohenden Unfalles auslösbar ist, und dabei das Hubelement mit der Fronthaube um einen vorgegebenen Arbeitshub aufstellt. Der Stand der Technik zeigt eine Reihe von Konstruktionen für diese Aufstellelemente, die typischerweise als Energiespeicher einen Federspeicher in Form einer vorspannbaren Schraubenfeder-Anordnung besitzen. Stellvertretend hierzu wird auf die DE 102 43 497 B4 verwiesen. Der Federspeicher wird dabei im Grundzustand durch eine Halterung, welche durch den Aktuator entsperrbar, d. h. auslösbar ist, im vorgespannten Zustand niedergehalten.

Da es vorkommen kann, dass die Aufstellelemente ausgelöst werden, ohne dass es zu einem Aufprall einer Person kommt, sei es durch eine ungewollte Auslösung oder ein leichtes Anstoßen beim Parkieren an Gegenstände, z.B. Mülltonnen, und um dann nicht, wenn auch mit nur leicht aufgestellter Fronthaube (ca. 55 mm), weiterfahren zu müssen, muss es möglich sein, das Aufstellelement vor Ort zu reversieren, d.h. in den gehaltenen Grundzustand mit vorgespannter Federanordnung zu bringen.

Man könnte zunächst daran denken, dieses Reversieren direkt manuell, insbesondere durch einen Fahrzeuginsassen, durchzuführen. Die hierbei direkt manuell ausübbaren Rückstellkräfte reichen jedoch nicht aus, um das aufgestellte Hubelement gegen die starke Federkraft der Schraubenfeder-Anordnung des Federspeichers direkt in den gehaltenen, d. h. gespannten Ausgangszustand zurückzudrücken oder zurückzuziehen. Es ist daher bekannt und auch vorgeschlagen worden, spezielle Hilfswerkzeuge für das Reversieren im PKW mitzuführen.

Um diese gesonderten Hilfswerkzeuge zu vermeiden, ist es gemäß der DE 103 23 118 A1 auch bekannt, die Fronthaube in Verbindung mit einem, beim Öffnen der Fronthaube auf Zug beanspruchten, einen Drehpunkt für einen zweiarmigen Hebel bildenden Zug-Stab als Hebelarm für das Reversieren der im Scharnierbereich aufgestellten Fronthaube zu benutzen. Die vorgenannte Schrift zeigt zwei Scharniere, an welchen die Fronthaube angelenkt ist, und welche jeweils bei einem drohenden Unfall um einen gewissen Hub durch einen Aktor aufstellbar sind. Sie zeigt ferner den verzögerungsfrei ausziehbaren Zug-Stab, welcher im Scharnierbereich mit seinem unteren Ende karosseriefest an dem Vorderwagen und mit dem anderen Ende direkt oder indirekt an der Fronthaube im Scharnierbereich drehbeweglich angelenkt ist. Beim manuellen Öffnen der Fronthaube stellt diese zunächst einen einarmigen Hebel dar, mit dem Hebel-Drehpunkt im Scharnier. Hat der Zug-Stab jedoch seine volle Auszugslänge erreicht, bildet der Anlenkpunkt an der Fronthaube einen neuen Hebel-Drehpunkt unter Ausbildung der Fronthaube als zweiarmigen Hebel mit dem langen Hebelarm, an welchem die relativ kleine Handkraft angreift, und dem kurzen Hebelarm, an welchem eine relativ hohe Reversierkraft entsteht, die das Scharnier mit dem Hubelement des Aktors gegen die Federkraft des Federspeichers in die gehaltene, gespannte Ausgangslage niederdrückt, d. h. reversiert. So lange der Zugstab beim Öffnen der Fronthaube in die sogenannte Kundenstellung noch ausgezogen wird, so lange erfolgt daher kein Reversieren des Scharniers. Erst nach Erreichen der vollen Auszugslänge des Zug-Stabes, d.h. wenn seine Länge konstant bleibt, setzt das Reversieren durch Niederdrücken des Scharniers mittels der Fronthaube selbst ein, wobei der Zug-Stab dabei "starr" bleibt.

Von einer derartigen Konstruktion geht die Erfindung aus.

Allerdings erhält bei einer derartigen Reversier-Einrichtung der manuell reversierende Fahrzeugführer kein sicheres Signal darüber, dass der Aktor ordnungsgemäß reversiert ist und die Halterung eingerastet ist, weder akustisch ("Knackgeräusch" beim Einrasten), noch visuell, noch manuell spürbar über eine Hebel-Kraftänderung. Es kann also vorkommen, dass der Fahrzeugführer eine zu hohe Handkraft auf die Fronthaube einwirken lässt, weil er glaubt, die Halterung des Aktors wäre noch nicht erreicht und damit eine Verformung der Fronthaube verursacht.

Der Erfindung liegt die Aufgabe zugrunde, ausgehend von dem vorgenannten Konstruktionsprinzip der Reversier-Einrichtung dem Fahrzeugführer ein deutliches Signal für die erfolgte Reversierung zu geben und zugleich eine Überlastung der Fronthaube auszuschließen. Das Signal soll dabei hörbar und ganz deutlich spürbar aufnehmbar sein.

Die Lösung dieser Aufgabe gelingt bei einer Vorrichtung zum Schutz von Personen bei einem Frontalaufprall auf ein Kraftfahrzeug durch aktives Aufstellen dessen Fronhaube im Haubenscharnierbereich, bestehend aus einem Aufstellelement mit einem karosseriefesten Gehäuse und einem darin linear geführten, mit dem Haubenscharnier verbundenen Hubelement, das gegen die Kraft einer vorgespannten Federanordnung mittels einer Halterung im Grundzustand niedergehalten ist, und sensorgesteuert unter Lösen der Halterung um einen vorgegebenen Hub unter Aufstellung der Fronthaube ausfahrbar ist, wobei dem Aufstellelement eine Einrichtung zum manuellen Reversieren des aufgestellten Hubelementes unter Zuhilfenahme der Fronthaube als Hebel zugeordnet ist, welche ein fest montiertes Revers-Element in Form eines beim Öffnen der Fronthaube verzögerungsfrei auf eine vorgegebene Länge ausziehbaren Zug-Stabes aufweist, das im Scharnierbereich einerseits an der Fronthaube und andererseits karosseriefest drehbeweglich angelenkt ist, gemäß der Erfindung dadurch, dass im Zug-Stab eine mechanische Überlastsicherung ausgebildet ist.

Die mechanische Überlastsicherung gibt dem Reversierenden ein deutliches Signal für die erfolgte Reversierung und verhindert dadurch eine plastische Verformung der Fronthaube. Sie gibt insoweit auf der eine Seite einen wirksamen zweiten Drehpunkt für die als zweiarmiger Hebel fungierende, manuell aufzustellende Fronthaube vor und gibt auf der anderen Seite nach erfolgter Reversierung, wenn sie weiterhin mit hoher auf die Fronthaube ausgeübter Handkraft ausgelöst wird, ein Knackgeräusch ab sowie macht sich durch einen deutlichen Kraftabfall bemerkbar, was den Reversierenden veranlasst, keine weitere Handkraft mehr aufzuwenden.

Weiterbildung und Ausgestaltungen der Erfindung sind in den Unteransprüchen gekennzeichnet sowie ergeben sich aus der nachfolgenden Figurenbeschreibung.

Anhand von in den Zeichnungen dargestellten Ausführungsbeispielen der Reversiereinrichtung wird die Erfindung näher erläutert.

Es zeigen:
- Fig. 1: in einer isometrischen Darstellung ein aufstellbares Scharnier für eine Fronthaube eines Kraftfahrzeuges mit eingebautem Revers-Element in Form einer ausziehbaren Doppel-Zuglasche mit axialem Langloch, in welcher eine Überlastsicherung in Form von im Langloch ausgebildeten Sperrnocken in Verbindung mit einem starren Sperrbolzen ausgebildet ist, im Grundzustand des zugehörigen Aufstellelementes (Aktors),
- Fig. 2: in einer schematisierten Seitenansicht das Scharnier nach Fig. 1 bei teilweise geöffneter Fronthaube und teilweise ausgezogener Zug-Lasche nach einer Aufstellung des Aktors in einer Position kurz vor dem Reversiervorgang in der sogenannten Kundenstellung,
- Fig. 3: in zwei Figurenteilen A, B, die Position der angehobenen Fronthaube und der ausgezogenen Zug-Lasche, bei der ein neuer Drehpunkt für die Reversierung unter Ausnutzung der Fronthaube als zweiarmiger Hebel gebildet wird, in einer Seitenansicht entsprechend Fig. 2 im Figurenteil 3A und einer Ausschnitt-Vergrößerung im Bereich der Überlastsicherung im Figurenteil 3B,
- Fig. 4: in zwei Figurenteilen A, B, die Position der Fronthaube und der vollständig ausgezogenen Zug-Lasche in der 90°-Servicestellung nach der Reversierung des Aktors und dem Überschreiten des Überlastschutzes, in einer Seitenansicht entsprechend Fig. 3 im Figurenteil 4A und einer AusschnittVergrößerung im Bereich der Überlastsicherung im Figurenteil 4B,
- Fig. 5: in einer Ausschnitt-Vergrößerung die Stellung der Zug-Lasche im Bereich der Überlastsicherung am Beginn des Schließvorganges der Fronthaube,
- Fig. 6: in einer Ausschnitt-Vergrößerung die Stellung der Zug-Lasche im Bereich der Überlastsicherung unter Darstellung des Faltvorganges der Zug-Lasche in den Grundzustand am Ende der Schließbewegung der Fronthaube,
- Fig. 7: in einer schematisierten isometrischen Darstellung eine ZugLasche mit einem schaltbaren Sperrelement anstelle eines starren Sperrbolzens,
- Fig. 8: in fünf Figurenteilen A - E den Aufbau des schaltbaren Sperrelementes mit zwei gegeneinander verdrehbaren Sperrnocken,
- Fig. 9: in zwei Figurenteilen das Zusammenwirken der Sperrnocken des schaltbaren Sperrelementes nach Fig. 8 mit den Sperrnocken des Langloches im Figurenteil 9A beim manuellen Öffnen der Fronthaube und im Figurenteil 9B beim Schließen der Fronthaube,
- Fig. 10: ein Revers-Element nach Art einer Kolben/Zylindereinheit mit Überlastsicherung, bestehend aus einem langgestreckten rohrförmigen Gehäuse und einem darin axial ausziehbar aufgenommenem Zug-Bolzen, im Figurenteil 10A in einer isometrischen Gesamt-Darstellung, im Figurenteil 10B in einer GesamtSchnittdarstellung, im Figurenteil 10D in einer isometrischen Explosions-Darstellung die Komponenten der Überlastsicherung und im Figurenteil 10C in einer Ausschnitt-Darstellung aus Fig. 10B die Funktion der Überlastsicherung, und
- Fig. 11: in zwei Figurenteilen A, B eine Einrichtung zum manuellen Ausschalten der Überlastsicherung nach den Figuren von 1 bis 9 beim manuellen Aufstellen der Fronthaube in die 90°-Servicestellung, in einer isometrischen Darstellung im Figurenteil A und einer Längsschnitt-Darstellung im Figurenteil B.

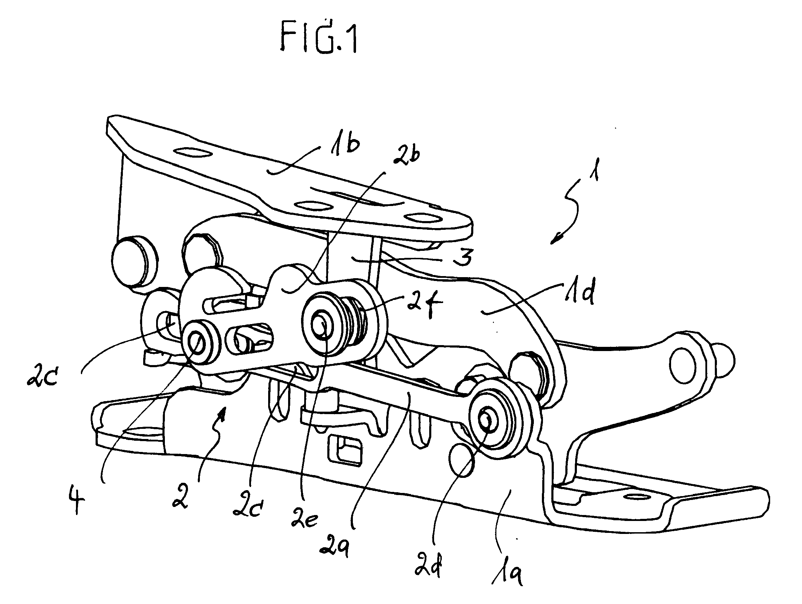

Die Fig. 1 zeigt ein typisches Scharnier 1 für die drehbewegliche Anbindung der Fronthaube eines Kraftfahrzeuges an die Karosse des Vorderwagens, wobei ein solches Scharnier an beiden Seiten des Vorderwagens windschutzscheibenseitig angebracht ist. Im vorliegenden Beispiel ist ein 4-Gelenk-Scharnier mit einem unteren Scharnierflügel 1 a, einem oberen Scharnierflügel 1b und zwei Gelenkstangen 1c, 1d, die jeweils drehbeweglich an den Scharnierflügeln angelenkt sind. Die Fig.1 zeigt dabei den Zustand des Scharniers bei geschlossener Fronthaube dargestellt (Grundzustand).

Prinzipiell können auch anders konstruierte Scharnieranordnungen angewendet werden. Die Erfindung ist davon unabhängig.

An dem oberen Scharnierflügel 1 b ist die Fronthaube angebracht, wogegen der untere, karosserieseitige Scharnierflügel 1 a mit einem (nicht dargestellten) Aufstellelement zum aktiven Aufstellen der Fronthaube im Scharnierbereich bei einem drohenden Frontalaufprall einer Person gekoppelt ist. Dieses Aufstellelement besteht typischerweise aus einem karosseriefest angebrachten Gehäuse und einem darin linear geführten, mit dem zugeordneten Scharnier verbundenen Hubelement, das sensorgesteuert mittels eines Federspeichers um einen vorgegebenen Hub unter Aufstellung der Fronthaube ausfahrbar ist. Der Aufbau des Aufstellelementes mit Federspeicher, auch Aktor genannt, kann auf irgendeine bekannte Art und Weise realisiert werden und braucht daher hier nicht näher beschrieben werden.

Die Erfindung wendet sich an die Einrichtung für die Reversierung einer aufgestellten Fronthaube, d. h. an das Revers-Element in Form eines Zug-Stabes, wie es in verschiedenen Ausführungsformen in der eingangs zitierten DE 103 23 118 A1 umfassend beschrieben worden ist. Durch ausdrückliche Bezugnahme auf diese Schrift soll deren Inhalt Teil der Offenbarung des Gegenstandes der vorliegenden Anmeldung sein.

Die erste Ausführungsform nach den Figuren 1 bis 6 der vorliegenden Anmeldung bezieht sich auf die bekannte Ausbildung des Zug-Stabes als zweigeteilte Zug-Lasche 2 mit Langloch, d. h. auf die vergleichbare Doppellasche entsprechend den Fig. 1 bis 6 der vorgenannten Schrift.

Die Zug-Lasche 2 weist zwei, jeweils aus einem streifenförmigen Flachmaterial bestehende Laschenteile 2a, 2b auf, von denen der untere Laschenteil 2a ein erstes, federspangenartig ausgebildetes Langloch 2c aufweist und karosseriefest mit einem ersten Zapfen 2d am unteren Scharnierflügel 1 a angelenkt ist, und von denen der obere Laschenteil 2b, der ein zweites Langloch 2f aufweist, mittels eines zweiten Zapfens 2e an einem Befestigungswinkel 3 des oberen Schamierflügelsl b drehbeweglich und im zweiten Langloch 2f verschiebbar angelenkt ist. Mittels eines Bolzens 4 oder Niete, Schraube oder dergleichen, der am oberen Laschenteil 2b befestigt ist und der das erste Langloch 2c durchdringt, ist das obere Laschenteil 2b verschiebbar am unteren Laschenteil 2a aufgenommen.

Der prinzipielle Ablauf der manuellen Reversierung mit einer derartigen Doppellasche unter Ausnutzung der Fronthaube als zweiarmiger Hebel ist in der vorgenannten Bezugsschrift ausführlich dargestellt. Wie eingangs erwähnt, kann es dabei zu Problemen kommen, weil nicht sicher erkennbar ist, dass das Aufstellelement eingerastet ist und daher gegebenenfalls eine zu hohe Handkraft eingesetzt wird, die zu einer Verwerfung der Fronthaube führen könnte.

Die Erfindung sieht daher eine Überlastsicherung in der Wirkungskette der Handkraft vor, die dem Reversierenden ein klares Signal gibt, dass das Aufstellelement in den Grundzustand eingerastet ist und daher keine Kraft mehr aufgebracht werden darf.

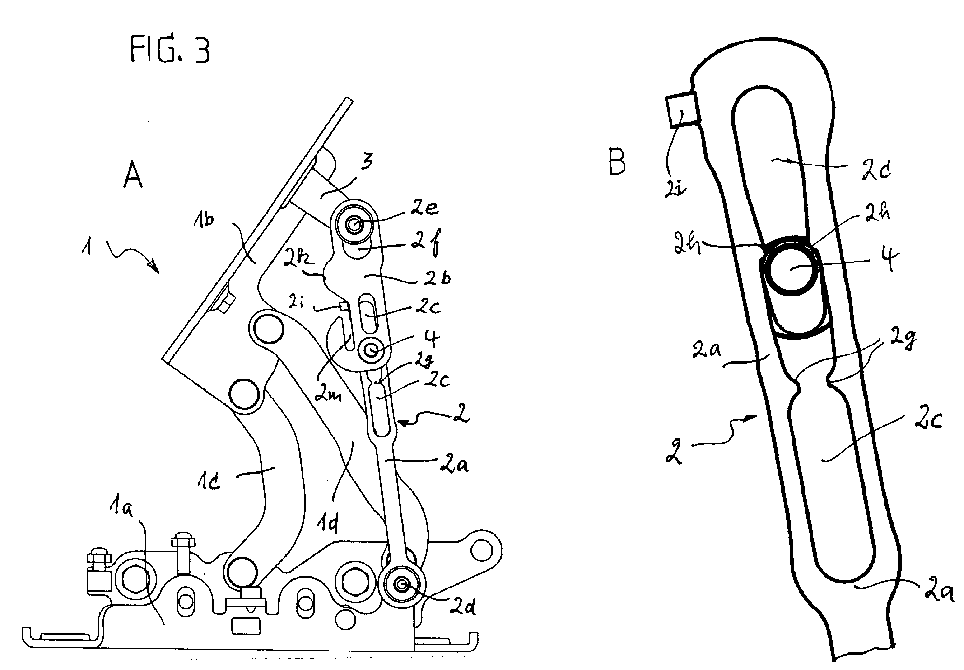

Diese Überlastsicherung ist zweckmäßig in dem Zug-Stab 2 selbst ausgebildet, so dass kein gesondertes zusätzliches Bauteil benötigt wird. Im Ausführungsbeispiel nach den Fig. 1 bis 6 mit der Doppel-Zuglasche 2 ist dabei die Überlastsicherung im ersten Langloch 2c des unteren Laschenteiles 2a ausgebildet. Während im bekannten Fall der Doppel-Zuglasche das entsprechende Langloch durchgehend eine konstante Breite aufweist, ist im Fall des Ausführungsbeispieles nach der Erfindung das erste Langloch in mehrere unterschiedliche Abschnitte mit federspangenartigen Seitenstegen unterteilt, wie insbesondere die Fig. 3B erkennen lässt. Im dargestellten Beispiel ist das Langloch 2c in drei Abschnitte unterteilt.

Zwischen den Langloch-Abschnitten befinden sich an den beiden Innenseiten der Seitenstege der Lasche einmal zwei Nocken 2h, welche den Querschnitt des Langlochs, abgestimmt auf den Durchmesser des starren Sperrbolzens 4, gezielt einschränken sowie zwei Anschläge 2g. In der Normalposition befindet sich dabei der Sperrbolzen im mittleren Langloch-Abschnitt. Das Nockenpaar 2h setzt der axialen Bewegung des Sperrbolzens 4 im ersten Langloch 2c beim Öffnen und Schließen der Fronthaube während des Reversiervorganges eines ausgefahrenen Aufstellelementes einen vorgegebenen Widerstand entgegen, der nur mit einer durch das Höhenmaß der Nocken bestimmten Kraft überwunden werden kann. Diese Widerstandskraft ist größer als die erforderliche Reaktionskraft aus der Reversierkraft beim Zurückdrücken des Hubelementes des Aufstellelementes und etwas geringer als die für die Fronthaube maximal zulässige Kraft, mit der diese belastet werden darf ohne sich plastisch zu verformen. Die Anschläge 2g begrenzen den Weg des Sperrbolzens.

Beim Überfahren der laschenseitigen Nocken 2h weichen diese unter elastischer Verformung der Seitenstege seitlich aus und gewähren dem Sperrbolzen 4 den Durchgang. Nach dem Passieren dieser nockenbedingten Engstelle wird dieses dem Reversierenden angezeigt, einmal durch ein akustisches Signal, nämlich ein deutliches Knacken und zum anderen durch einen sofortigen Kraftabfall, was dann instinktiv beim Reversierenden Fahrer zur Reduzierung der Handkraft an der Fronthaube führt.

### Die Abläufe beim Reversieren sind dabei im Einzelnen wie folgt:

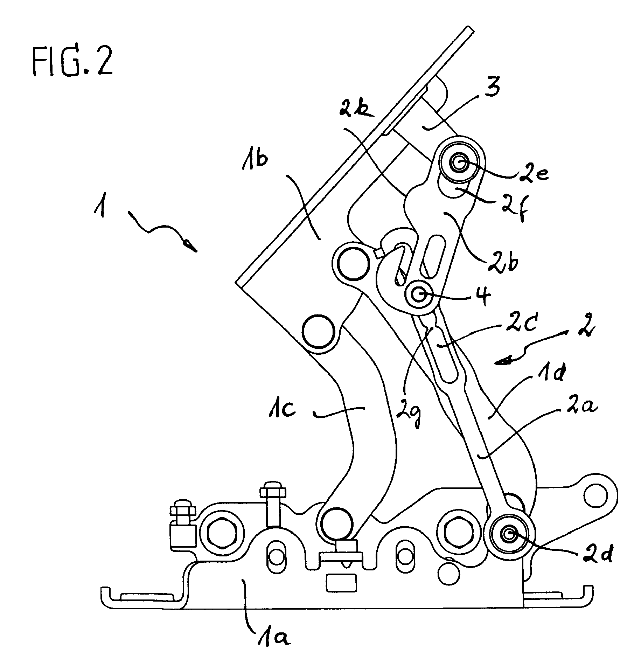

Um das aufgestellte Hubelement mit Fronthaube zu reversieren, muss zunächst die Fronthaube manuell aufgestellt werden. Dabei wird die Zug-Lasche 2 axial auseinander gezogen. Die Fig. 2 zeigt dabei die Stellung der Fronthaube und der Zug-Lasche 2 noch vor dem Reversier-Vorgang in der Kundenstellung, bei welcher die Zug-Lasche noch nicht vollständig auseinander gezogen ist, d. h. der Sperrbolzen 4 sich noch innerhalb des mittleren Abschnittes des ersten Langloches 2c befindet. Die Kundenstellung ist dabei die normale geöffnete Stellung der Fronthaube, um einfache, kundenbezogene Wartungsarbeiten, wie Nachfüllen von Öl oder Waschflüssigkeit, durchführen zu können. Als Servicestellung wird die um 90° aufgestellte Position der Fronthaube bezeichnet, wie sie typischerweise bei Werkstattarbeiten zum Einsatz kommt, weswegen man sie auch als Werkstattstellung bezeichnet.

Beim weiteren Aufstellen der Fronthaube wird die Zug-Lasche 2 vollständig ausgezogen und der Sperrbolzen 4 kommt dabei an dem Nockenpaar 2h zur Anlage und setzt dem weiteren Öffnen der Fronthaube einen deutlichen Widerstand entgegen. Dieser Zustand ist in Fig. 3 dargestellt. In dieser Stellung bildet sich der "neue Drehpunkt" für die nunmehr als zweiarmiger Hebel wirkende Fronthaube, wobei beim weiteren Aufstellen der Fronthaube der scharnierseitige kurze Hebelarm das aufgestellte Hubelement des Aktors in dessen Gehäuse drückt, bis das Hubelement in den Grundzustand einrastet. Dabei sind sowohl der Bolzenquerschnitt als auch die Innenkontur des ersten Langloches der Zug-Lasche so geformt und aufeinander abgestimmt, dass eine definierte und begrenzte Haltekraft für den "neuen Drehpunkt" erreicht wird.

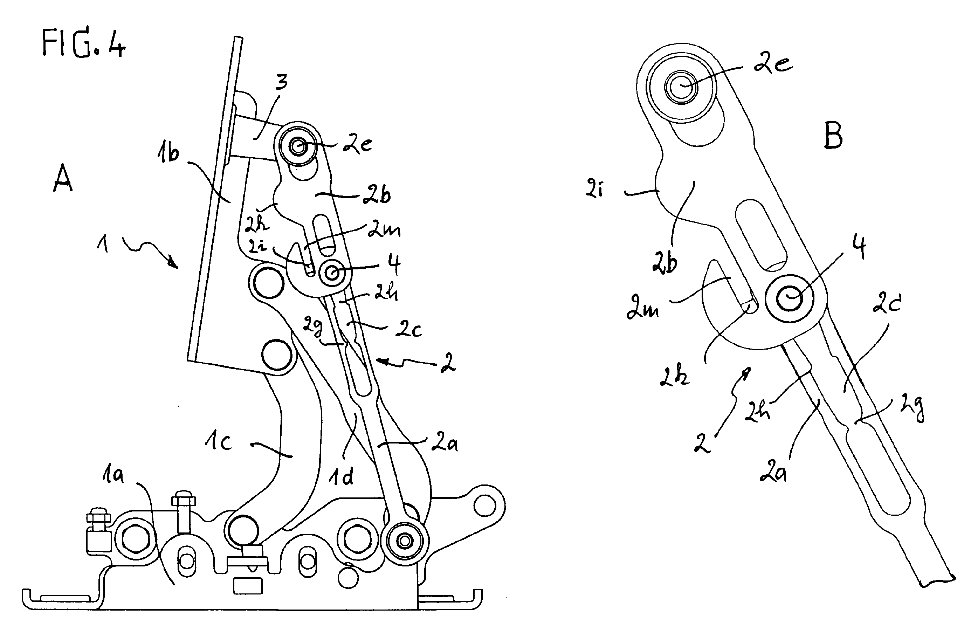

Wenn dieses Einrasten nicht bemerkt wird und weiterhin eine entsprechende Handkraft aufgebracht wird, wird das obere Nockenpaar 2h vom Sperrbolzen 4 überfahren und dieser gelangt in den obersten Abschnitt des ersten Langloches 2c. Dies macht sich durch ein Knackgeräusch und einem Kraftabfall sofort bemerkbar, so dass der Reversierende die Handkraft instinktiv reduziert. Dieser Zustand mit der um 90° in die Servicestellung aufgestellten Fronthaube mit reversiertem Aufstellelement ist in Fig. 4 dargestellt.

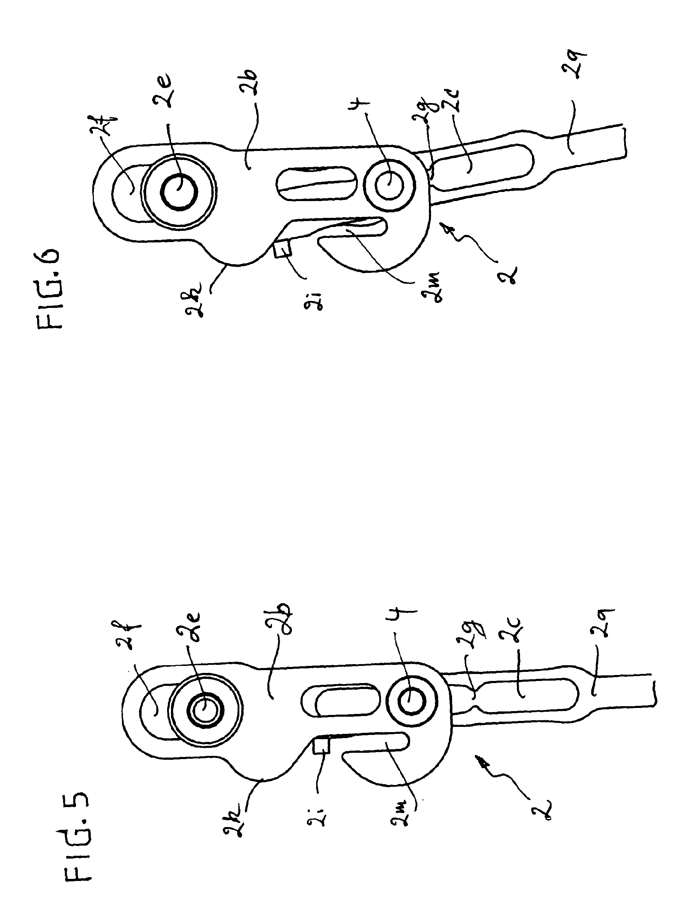

Die Fig. 5 zeigt die Stellung der Zug-Lasche 2 nach dem Zurückfahren des Sperrbolzens 4 über das Sperrnockenpaar 2h in den mittleren Abschnitt des ersten Langloches 2c beim Schließen der Fronthaube. Beim weitere Schließen fährt gemäß Fig. 6 ein Steuernocken 2i, der außen am unteren Laschenteil 2a angebracht ist, entlang einer äußeren Kulisse 2k am oberen Laschenteil 2b und bewirkt dabei ein gezieltes Ausknicken und Zusammenfalten der Zug-Lasche zu ihrer sicheren Ablage bei geschlossener Haube.

Wie dabei insbesondere die Fig. 4 zeigt, dient dabei die Steuernocke 2i zusammen mit einer Ausnehmung 2m in dem oberen Laschenteil 2b gleichzeitig zum Feststellen der Zug-Lasche 2 in der Servicestellung.

In den Fig. 1 bis 6 ist eine Überlastsicherung mit einem starren Sperrbolzen 4 dargestellt, der auch beim axialen Rückstellen in dem mit Sperrnocken 2h versehenen ersten Langloch 2c gegen den Widerstand der Nocken diese unter Spreizen der Stege des Langloches mit etwas Kraftaufwand überfahren muss, was möglicherweise den Reversierenden irritiert.

Die weiteren Figuren zeigen daher eine alternative Ausführung mit einem schaltbaren Sperrelement, welches eine nahezu kraftlose Rückstellung erlaubt, d. h. welches in der einen Bewegungsrichtung in Verbindung mit den innen liegenden Nocken 2h einen hohen mechanischen Widerstand ergibt und in der entgegengesetzten Richtung kraftlos durch die mechanischen Sperre der Nocken 2h zurückgeleitet.

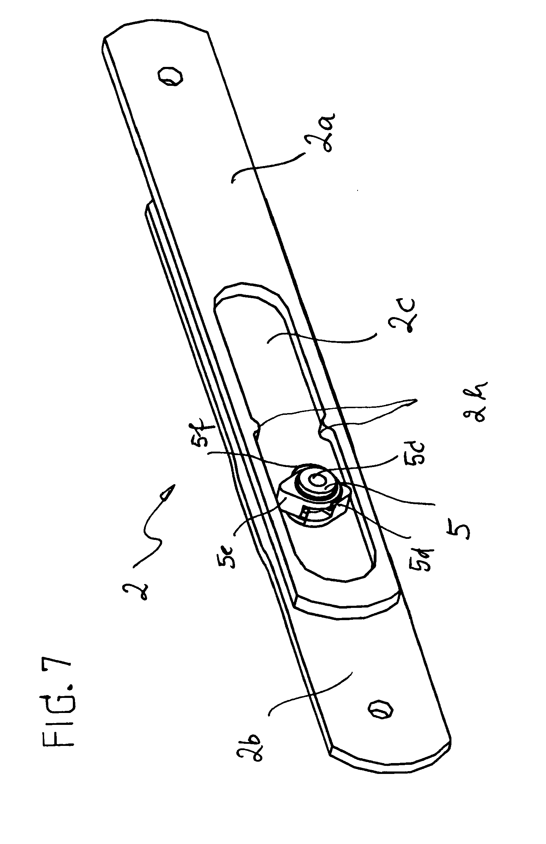

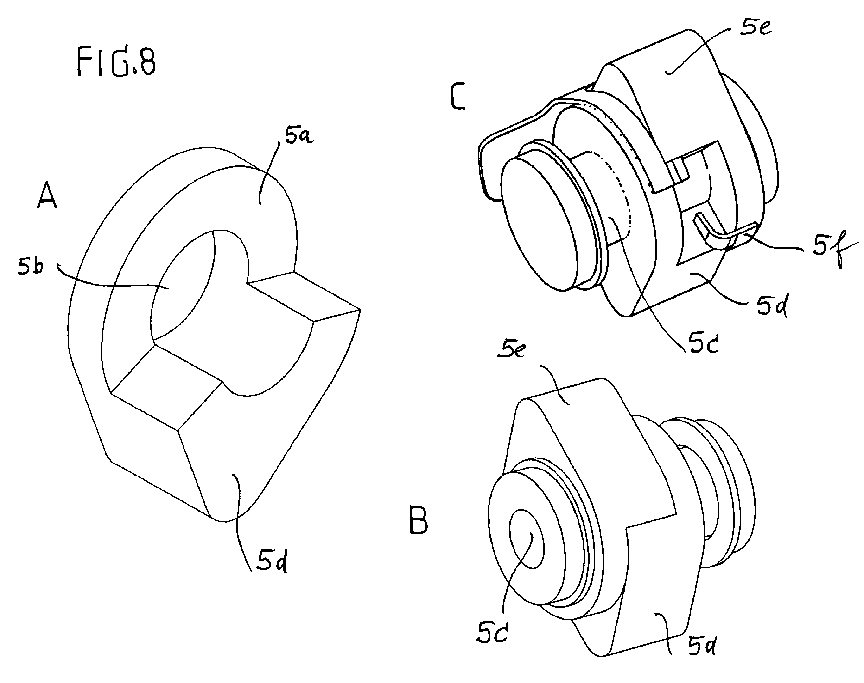

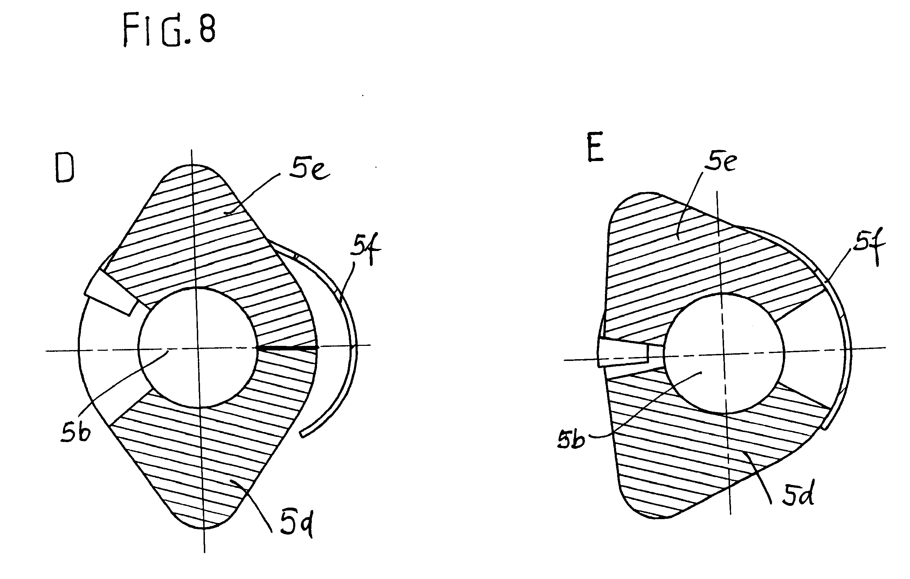

Die Fig. 7 zeigt in einer schematisierten isometrischen Darstellung die Zug-Lasche 2 mit den beiden Laschenteilen 2a, 2b von denen das untere Laschenteil 2a das Langloch 2c mit dem Nockenpaar 2h aufweist, und von denen das obere Laschenteil 2b mit dem schaltbaren Sperrelement 5 versehen ist. Der nähere Aufbau dieses schaltbaren Sperrelementes ist in Fig. 8 in verschiedenen Ansichten dargestellt.

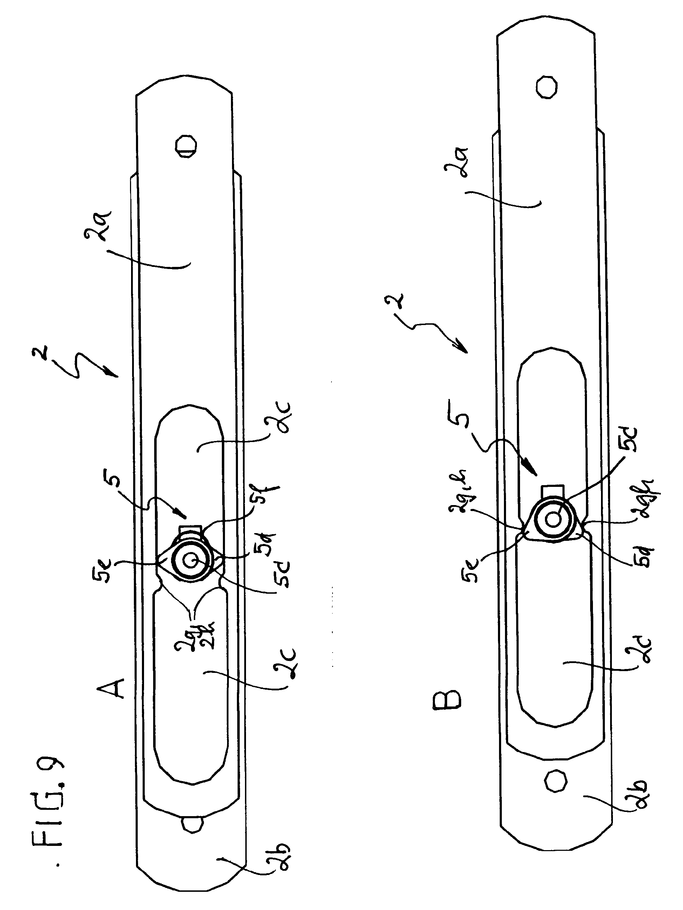

Auf einem Grundkörper 5a, der eine Bohrung 5b zur Aufnahme eines Bolzens 5c zur drehbeweglichen Befestigung des Grundkörpers an dem oberen Laschenteil 2b besitzt, ist eine erste parabelförmige Sperrnocke 5d angeformt (Fig. 8). Auf dem Bolzen 5c ist ferner eine zweite parabelförmige Sperrnocke 5e drehbeweglich aufgenommen, die in Wirkverbindung mit der ersten Sperrnocke 5d steht (Fig. 8B und C). Die beiden drehbeweglich zueinander gelagerten und durch eine Feder 5f gegenseitig vorgespannten Sperrnocken 5d und 5e sind so ausgebildet und ausgerichtet, dass im Grundzustand ihre beiden Parabelbögen gegenüberliegen und sie sich in der einen Richtung gegeneinander abstützen und damit eine Sperrwirkung gegenüber den innen liegenden Anschlägen bzw. Nocken 2g bzw 2h der Zug-Lasche bilden (Draufsicht Fig. 8D mit Fig. 9A). In der entgegengesetzten Richtung drehen sich die Sperrnocken gegen die Federwirkung derart zusammen, dass ein kraftloses Rückstellen des Sperrelementes möglich ist (Draufsicht Fig. 8E mit Fig. 9B).

Bei den beiden Ausführungsformen der Doppel-Zuglasche 2 nach den Fig. 1 bis 6 und 7 bis 9 ist das Sperrelement 4 bzw. 5 am oberen Laschenteil 2b angebracht und das Langloch 2c im unteren Laschenteil 2a ausgebildet. Es kann aber auch umgekehrt das Langloch im oberen Laschenteil ausgebildet und das Sperrelement im unteren Laschenteil angebracht sein.

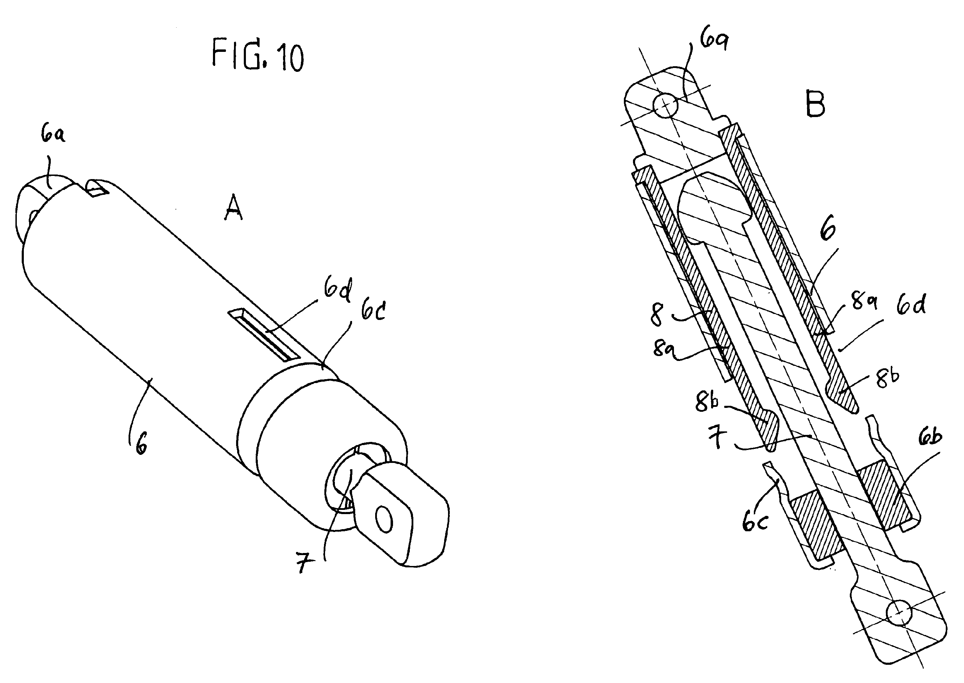

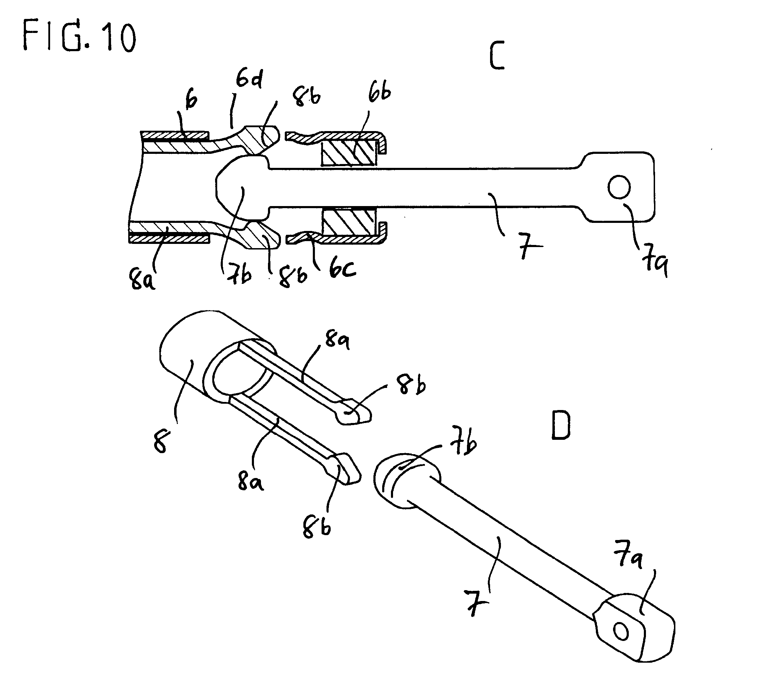

Die Fig. 10 zeigt in vier Figurenteilen A - D anstelle der ausziehbaren und faltbaren Zug-Laschen 2 nach den Figuren 1 - 9 ein starres Revers-Element nach Art einer Kolben/Zylindereinheit, bestehend aus einem langgestreckten rohrförmigen Gehäuse 6 und einem darin axial ausziehbar aufgenommenem Zug-Bolzen 7. Der Gesamtaufbau ist äusserlich ähnlich einer Gasfeder oder einem Stoßdämpfer, jedoch ohne hydraulische oder pneumatische Funktionen.

Das rohrförmige Gehäuse 6 besitzt am einen Ende ein Anschlussstück 6a zur drehbeweglichen Anlenkung und weist am anderen Ende ein eingebördeltes Führungs/Anschlagstück 6b auf, das vom Zug-Bolzen 7 führend durchdrungen ist und das im Gehäuse axial durch eine eingerollte oder eingeprägte Sicke 6c fixiert ist. Das Gehäuse 6 weist ferner einen Schlitz 6d auf, dessen Funktion später noch erläutert werden wird. Im Gehäuseinneren ist ferner eine Federhülse 8 mit zwei federnd nachgebenden Zungen 8a angebracht, die beispielsweise eine Breite von 3 - 6 mm besitzen und an ihren freien Enden jeweils einen sich nach innen erstreckenden Sperrnocken 8b aufweisen.

Der Zug-Bolzen 7 weist ausserhalb des Gehäuses 6 eine Abflachung 7a mit einer Befestigungsbohrung als zweites Anschlussstück für die drehbewegliche Anlenkung des Revers-Elementes auf. Am anderen Ende des Zug-Bolzens 7 ist ein pilzförmiger Ansatz 7 b vorgesehen, dessen größter Durchmesser dem Innendurchmesser der Federhülse entspricht.

Im Normalzustand der Fronthaube befindet sich der pilzförmige Ansatz 7b in der Position gemäß Fig. 10B. Wird die Fronthaube manuell aufgestellt, wird der Zug-Bolzen 7 entsprechend ausgezogen. Bei Erreichen des für die Reversierung notwendigen Hebel-Drehpunktes befindet sich der pilzförmige Ansatz 7b in der Position nach Fig. 10C. Die federnden Zungen 8a mit ihren Sperrnocken 8b üben dabei einen Widerstand auf den Ansatz 7b und damit auf die Bewegung des Zug-Bolzens 7 aus. Beim Überwinden dieses die Überlastsicherung vorgebenden Widerstandes, durchdringen dabei jeweils die radial ausweichenden Federzungenenden den zugehörigen Gehäuseschlitz 6a. Nach Überwinden des Widerstandes, d. h. nach der Reversierung lässt sich der Zug-Bolzen leicht weiter ausziehen. Dieser Kraftabfall zeigt an, dass die Überlastsicherung gewirkt hat. Das Führungs/Anschlagstück 6b begrenzt dabei die Ausziehlänge des Zug-Bolzens.

Dabei ist die Kraft zur Überwindung des Widerstandes durch die Länge des Schlitzes 6d einstellbar. Damit kann mit Vorteil bei einem identischen Grundmodel eine gute Adaption für den jeweiligen Anwendungsfall (Größe und Masse der Haube, Scharniergeometrie, usw.) erreicht werden.

In einer Variante zur Fig. 10 können auch mehr als zwei federnde Zungen vorgesehen sein.

Auch muss das Gehäuse 6 nicht zwingend durch ein rundes Rohr gebildet sein. Es kann auch als Rechteckrohr mit flachem Querschnitt ausgeführt sein, in Verbindung mit einem aus Flachmaterial hergestellten Zug-Bolzen.

Wie aus der bisherigen Beschreibung zu entnehmen ist, wird beim normalen Öffnen der Fronthaube in die Kundenstellung die Überlastsicherung nicht ausgelöst, da der Sperrbolzen 4 das Sperrnockenpaar 2h nicht überfahren muss. Wird jedoch die Fronthaube in die 90°-Servicestellung geöffnet, muss das Sperrnockenpaar 2h vom Sperrbolzen 4 überfahren, d. h. die Überlastsicherung ausgelöst werden, ohne dass die Aktoren zuvor aufgestellt wurden. Dies beeinträchtigt die Lebensdauer der Bauteile und den Komfort bei der Bedienung. In einer Weiterbildung der Erfindung ist daher eine Einrichtung vorgesehen, die es ermöglicht, die Überlastsicherung beim Aufstellen der Fronthaube in die 90°-Servicestellung manuell "auszuschalten".

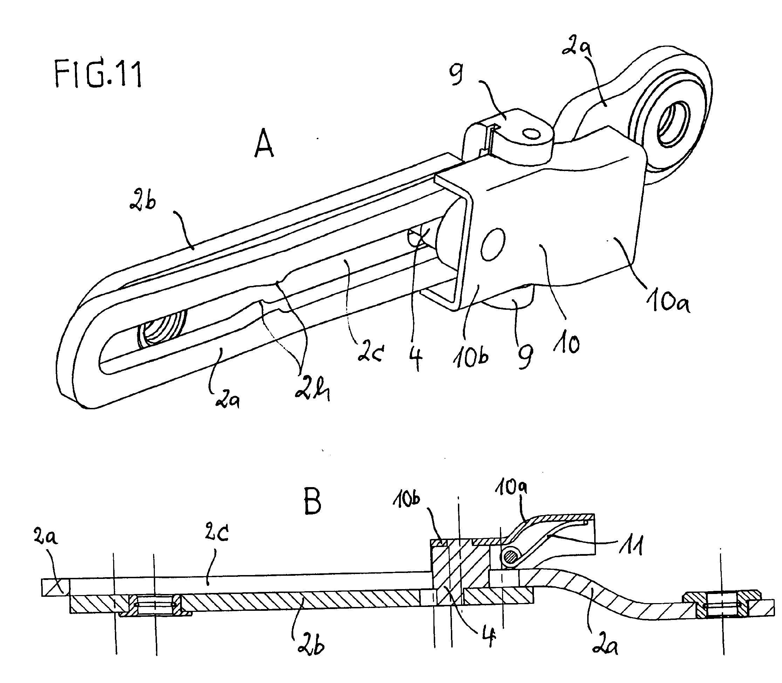

Ein Ausführungsbeispiel für eine derartige Einrichtung ist in Fig. 11 in zwei Figurenteilen A und B auf der Basis der zweigeteilten Zug-Lasche 2 nach den Figuren 1 - 9 mit der Überlastsicherung in Form der inneren Sperrnocken 2h im Langloch c und dem starren Sperrbolzen 4 dargestellt. Die Fig. 11 B zeigt dabei einen Längsschnitt, genommen mittig entlang des Langloches 2c. Es versteht sich, dass diese Maßnahme unter entsprechender konstruktiver Anpassung auch bei anderen Ausbildungen der Überlastsicherung angewendet werden kann.

Die der Konstruktion der Einrichtung nach Fig. 11 zugrundeliegende erfinderische Idee besteht darin, den Sperrbolzen 4 manuell ausser Wirkeingriff mit dem ersten Langloch 2c - und damit auch mit den Sperrnocken 2h - zu bringen, wenn man die Fronthaube in die 90°-Servicestellung bringt. Dann kann die Fronthaube, wie gewohnt, ohne Überwindung eines Widerstandes in die Servicestellung gebracht werden, was die Bauteile der Überlastsicherung schont und den Komfort erhöht.

Während bei den Ausführungsformen nach den Figuren 1 bis 9 der starre Sperrbolzen 4 bzw. das schaltbare Sperrelement 5 fest am oberen Laschenteil 2b angebracht ist, ist bei der Einrichtung nach Fig. 11 an dem oberen Laschenteil 2b eine lagerbockartige Halterung 9 angebracht, in welcher eine manuell niederdrückbare Betätigungstaste 10 wippenartig angelenkt ist. Diese Betätigungstaste ist mittels einer Schenkelfeder 11, die auf der Achse der Anlenkung der Betätigungstaste an der lagerbockartigen Halterung 9 eingespannt ist, vorgespannt und besitzt zwei Arme 10a und 10b. Der federunterstützte Arm 10a dient der manuellen Betätigung der Betätigungstaste und am anderen Arm 10b ist der Sperrbolzen 4 fest angebracht. Durch manuelles Drücken auf den Arm 10a der Betätigungstaste 10 wird der andere Arm 10b nach oben verschwenkt, so dass auch der Sperrbolzen 4 aus dem Langloch 2c herausgeschwenkt wird. Beim Aufstellen in die 90°-Servicestellung können dann die beiden Laschenteile 2a, 2b ausgezogen werden, ohne dass der Sperrbolzen in Wirkeingriff mit den inneren Sperrnocken 2h kommt.

### Bezugszeichenliste

- 1: Scharnier
- 1 a: unterer Scharnierflügel
- 1 b: oberer Scharnierflügel
- 1 c, d: Gelenkstangen
- 2: Zug-Lasche
- 2 a: unteres Laschenteil
- 2 b: oberes Laschenteil
- 2 c: erstes Langloch
- 2 d: erster Zapfen
- 2 e: zweiter Zapfen
- 2 f: zweites Langloch
- 2 g: Anschlag
- 2 h: Sperrnocken
- 2 i: Steuernocken
- 2 k: Kulisse
- 2 m: Ausnehmung
- 3: Befestigungswinkel
- 4: Sperrbolzen
- 5: schaltbares Sperrelement
- 5 a: Grundkörper
- 5 b: Bohrung
- 5 c: Bolzen
- 5 d: erste parabelförmige Sperrnocke
- 5 e: zweite parabelförmige Sperrnocke
- 5 f: Feder
- 6: Gehäuse
- 6 a: Anschlussstück
- 6 b: Führungs/Anschlagstück
- 6 c: Sicke
- 6 d: Schlitz
- 7: Zug-Bolzen
- 7 a: Abflachung
- 7 b: pilzförmiger Ansatz
- 8: Federhülse
- 8 a: Zungen
- 8 b: Sperrnocken
- 9: lagerbockartige Halterung
- 10: Betätigungstaste
- 10 a,: b Arme
- 11: Schenkelfeder

## Patentansprüche

1. Vorrichtung zum Schutz von Personen bei einem Frontalaufprall auf ein Kraftfahrzeug durch aktives Aufstellen dessen Fronhaube im Haubenscharnierbereich, bestehend aus einem Aufstellelement mit einem karosseriefesten Gehäuse und einem darin linear geführten, mit dem Haubenscharnier (1) verbundenen Hubelement, das gegen die Kraft einer vorgespannten Federanordnung mittels einer Halterung im Grundzustand niedergehalten ist, und sensorgesteuert unter Lösen der Halterung um einen vorgegebenen Hub unter Aufstellung der Fronthaube ausfahrbar ist, wobei dem Aufstellelement eine Einrichtung zum manuellen Reversieren des aufgestellten Hubelementes unter Zuhilfenahme der Fronthaube als Hebel zugeordnet ist, welche ein fest montiertes Revers-Element in Form eines beim Öffnen der Fronthaube verzögerungsfrei auf eine vorgegebene Länge ausziehbaren Zug-Stabes (2) aufweist, das im Scharnierbereich einerseits an der Fronthaube und andererseits karosseriefest drehbeweglich angelenkt ist, wobei im Zug-Stab (2) eine mechanische Überlastsicherung (2h mit 4; 2h mit 5 und 8b mit 7b) ausgebildet ist.

2. Vorrichtung nach Anspruch 1, **dadurch gekennzeichnet, dass** der Zug-Stab als axial ausziehbare Zug-Lasche (2) ausgebildet ist, mit einem karosseriefest drehbeweglich angelenkten unterem Laschenteil (2a) und einem fronthaubenseitig drehbeweglich angelenkten oberen Laschenteil (2b), von denen ein Laschenteil ein axiales Langloch (2c) und das andere Laschenteil ein das Langloch durchdringendes Sperrelement (4, 5) besitzt, und dass als Überlastsicherung an der Innenkontur des Langloches (2c) mindestens an der Position, in der sich das Sperrelement (4, 5) bei vollständig ausgezogener Zug-Lasche (2) befindet, eine auf den Querschnitt des Sperrelementes abgestellte Engstelle ausgebildet ist, derart, dass diese nur mit einer vorgegebenen Kraft vom Sperrelement überfahrbar ist.

3. Vorrichtung nach Anspruch 2, **dadurch gekennzeichnet, dass** das Langloch (2c) mit der an der Innenkontur angeformten Engstelle im unteren Laschenteil (2a) ausgebildet und das zugehörige Sperrelement (4, 5) am oberen Laschenteil (2b) befestigt ist.

4. Vorrichtung nach Anspruch 2 oder 3, **dadurch gekennzeichnet, dass** Langloch (2c) in mindestens zwei Abschnitte unterteilt ist, mit jeweils einer angeformten Engstelle zwischen zwei benachbarten Abschnitten.

5. Vorrichtung nach einem der Ansprüche 2 bis 4, **dadurch gekennzeichnet, dass** die Engstelle durch zwei gegenüberliegend an der Innenkontur des Langloches (2c) angeformte Sperrnocken (2h) gebildet ist.

6. Vorrichtung nach einem der Ansprüche 2 bis 5, **dadurch gekennzeichnet, dass** das Sperrelement als starrer Sperrbolzen (4) ausgebildet ist.

7. Vorrichtung nach einem der Ansprüche 2 bis 5, **dadurch gekennzeichnet, dass** das Sperrelement als schaltbares Sperrelement (5) ausgebildet ist, derart, dass es nur beim Auseinanderziehen der Zug-Lasche (2) an der Engstelle in der Sperrlage ist.

8. Vorrichtung nach Anspruch 7, **dadurch gekennzeichnet, dass** das schaltbare Sperrelement (5) zwei auf einer gemeinsamen Achse (5c) gegenseitig verdrehbar und federvorgespannt aufgenommene Sperrnocken (5d, 5e) besitzt.

9. Vorrichtung nach einem der Ansprüche 3 bis 8, **dadurch gekennzeichnet, dass** am unteren Laschenteil (2a) ein Steuernocken (2i) und am oberen Laschenteil (2b) eine zugehörige Kulisse (2k) als Knick- und Falthilfe ausgebildet ist.

10. Vorrichtung nach Anspruch 9, **dadurch gekennzeichnet, dass** am oberen Laschenteil (2b) zusätzlich eine Ausnehmung (2m) für eine führende und knickstabile Aufnahme des Steuemockens (2i) im ausgezogenen Zustand der Zug-Lasche ausgebildet ist.

11. Vorrichtung nach Anspruch 1, **dadurch gekennzeichnet, dass** der Zug-Stab als rohrförmiges Gehäuse (6) mit einem darin geführt ausziehbar aufgenommenen Zug-Bolzen (7) ausgebildet ist mit einer Überlastsicherung im Gehäusemantel (6b).

12. Vorrichtung nach Anspruch 11, **dadurch gekennzeichnet, dass** der Gehäusemantel (6b) an mindestens zwei gegenüberliegenden Positionen jeweils einen Schlitz (6d) aufweist, dass an der Innenwand des Gehäusemantels (6b) ein hülsenförmiger Einsatz (8) mit mindestens zwei auf Höhe der Schlitze (6d) gegenüberliegend angeformten Federzungen (8a), an deren freiem Ende jeweils ein Sperrnocken (8b) ausgebildet ist, angebracht ist, und dass der Zug-Bolzen (7) kopfseitig einen pilzförmigen Ansatz (7a) zum spreizenden Wirkeingriff mit den Sperrnocken (8b) der Federzungen (8) aufweist.

13. Vorrichtung nach Anspruch 11 oder 12, **dadurch gekennzeichnet, dass** das rohrförmige Gehäuse (6) kreisrund ausgebildet ist.

14. Vorrichtung nach Anspruch 11 oder 12, **dadurch gekennzeichnet, dass** das rohrförmige Gehäuse als flaches Viereckgehäuse ausgebildet ist.

15. Vorrichtung nach einem der Ansprüche 1 bis 14, **dadurch gekennzeichnet, dass** eine manuell betätigbare Einrichtung (9 - 11) zum temporären Ausschalten der Überlastsicherung vorgesehen ist.

16. Vorrichtung nach Anspruch 2 und Anspruch 15, **dadurch gekennzeichnet, dass** das Sperrelement (4, 5) an einer drehbeweglich an dem zugehörigen Laschenteil (2b) wippenartig und federvorgespannt angelenkten Betätigungstaste (10) ausschwenkbar aus dem axialen Langloch (2c) befestigt ist.
